# EUROPÄISCHE PATENTSCHRIFT

(11) **EP 2 126 711 B1**
(45) Veröffentlichungstag und Bekanntmachung des Hinweises auf die Patenterteilung: **10.04.2013**
(21) Anmeldenummer: 07846569.7
(22) Anmeldetag: 13.11.2007
(51) Int. Cl.: G06F 13/38

(54) **DATENSPEICHERVORRICHTUNG MIT ZUSATZFUNKTION**
DATA MEMORY DEVICE WITH AUXILIARY FUNCTION
DISPOSITIF DE MÉMOIRE DE DONNÉES PRÉSENTANT UNE FONCTION SUPPLÉMENTAIRE

(30) Priorität: 16.11.2006 DE 102006054025
(43) Veröffentlichungstag der Anmeldung: 02.12.2009
(73) Patentinhaber: Giesecke & Devrient GmbH, 81607 München (DE)
(72) Erfinder: ASCHAUER, Hans, 81829 München (DE); BARTSCH, Armin, 86899 Landsberg a. Lech (DE)
(86) Internationale Anmeldenummer: PCT/EP2007/009811
(87) Internationale Veröffentlichungsnummer: WO 2008/058705

(56) Entgegenhaltungen:
- US-A1- 2005 138 303
- US-A1- 2006 161 749
- US-B1- 6 883 718

## Beschreibung

Die Erfindung betrifft Massenspeichermedien mit Zusatzfunktion. Insbesondere betrifft die Erfindung Speicherkarten mit Sicherheitsfunktion.

Portable Massenspeicher mit immer größer werdender Speicherkapazität werden in einer Vielzahl von elektronischen Geräten verwendet. Auf ihnen können digitale Inhalte bzw. Text-, Bilder-, Audio- oder Video-Daten oder Ähnliches gespeichert werden. Portable Massenspeicher weisen dabei den Vorteil auf, dass sie von verschiedenen elektronischen Geräten wie PCs, PDAs, SmartPhones, Digitalkameras, Audiogeräten, usw. gelesen und gegebenenfalls beschrieben werden können. Die portablen Massenspeicher ermöglichen dadurch ein einfaches Sichern und Transportieren digitaler Inhalte. Um sie zu verwenden ist es allerdings erforderlich, dass jedes der elektronischen Geräte über ein in eine Hardware-Plattform integriertes, geeignetes Lese-/Schreibgerät und einen entsprechenden Treiber für Zugriffe auf den Massenspeicher verfügt.

Es wurden dazu verschiedene Standards entwickelt, die unterschiedliche Verbreitung finden. Verbreitete Massenspeicher sind beispielsweise Multimedia Cards (MMC), Secure Digital Memory Cards (SD Cards), MicroSD Karten, Memory Sticks (USB Sticks) aber auch CDs, DVDs etc. Damit die Massenspeicher in einer Vielzahl von Geräten funktionieren müssen Treiber für die entsprechenden Betriebssysteme der Hardware-Plattformen bereitgestellt werden.

In vielen Fällen ist es wünschenswert den Massenspeicher zusätzlich mit Sicherheitsfunktionen oder auch anderen, weiteren Funktionen auszustatten, um beispielsweise bestimmte digitale Inhalte des Speichers vor unberechtigtem Zugriff zu schützen. Eine solche Sicherheitsfunktionalität kann durch SmartCard-Chips, wie er von Chipkarten her bekannt ist, erreicht werden, indem der SmartCard-Chip in die Massenspeicherkarte integriert ist.

Aus der DE 698 15 258 sind programmierbare löschbare und nicht-flüchtige Speicher bekannt, die eine lese- und/ oder schreib-schützbare Zone aufweisen, wobei eine absolut festgelegte speicherunabhängige Grenzadresse, ein Schutzregister, die schreib-schützbare Zone von den restlichen Speicherplätzen abgrenzt und wählbar ist, auf welcher Seite der Grenzadresse die schreib-schützbare Zone befindlich sein soll. Dazu kann ein Schutzwort in das Schutzregister geschrieben werden, um Ort und Größe der schreibschützbaren Zone zu definieren.

Aus der EP 1304 702 sind eine portable Halbleiter-Speicherkarte und ein Daten-Lesegerät für die Speicherkarte in einer elektronischen Vorrichtung bekannt, mit dem digitale Inhalte geschützt werden können. Die Speicherkarte umfasst einen wiederbeschreibbaren, nicht-flüchtigen Speicher mit einem Authentifizierungsbereich und einem nicht zu authentifizierenden Bereich. Die Speicherkarte umfasst zudem einen Steuerungsschaltkreis mit einer Steuerungseinheit für den nicht zu authentifizierenden Bereich und eine Authentifizierungseinheit, welche einen Authentifizierungsprozess ausführt, um zu prüfen, ob die elektronische Vorrichtung berechtigt ist über eine Zugangssteuerung für den Authentifizierungsbereich, auf den Authentifizierungsbereich zuzugreifen. Dabei kommuniziert die elektronische Vorrichtung verschlüsselt und die Zugangssteuerung entscheidet nach Entschlüsselung der Befehle, ob auf den geschützten Bereich zugegriffen wird.

Die bekannten Systeme haben den Nachteil, dass die zu schützenden Daten lediglich in einem bestimmten und begrenzten Abschnitt des Speichers abgelegt werden und spezielle Treiber erforderlich sind, um auf die Speicherkarte zuzugreifen. Die Einrichtung spezieller Treiber ist aufwendig und unpraktisch, da für unterschiedliche Geräte mit unterschiedlichen Betriebssystemen jeweils eigene Treiber entwickelt und implementiert werden müssen. Darüberhinaus ist das nachträgliche Einrichten spezieller Treiber durch den Benutzer nicht in allen Systemen möglich, z.B. nicht in SmartPhones, die mit dem Betriebssystem "Symbian" betrieben werden.

US 2006/0161749 A1 offenbart einen Controller für einen Speicherbaustein, in dem bestimmte Adressen zunächst reserviert und für einen Host nicht unmittelbar zugänglich sind. Die reservierten Adressen können zugänglich gemacht werden, sofern die darin abgelegten Inhalte zuvor ausgelesen wurden. Zweck der Lösung ist insbesondere die Verbreitung von Werbung.

US 2005/0138303 A1 beschreibt eine Speicherkarte, insbesondere eine SD-Karte, die zusätzlich zu einem Flash-Speicher einen IC-Chip enthält. Ein Host kann wahlweise auf den Flash-Speicher oder auf den IC-Chip zugreifen. Zugriffe auf den IC-Chip werden mit Hilfe zweier Schnittstellencontroller sowie im Speicher reservierter Lese- und Schreibblöcke durchgeführt. Eingehende Hostdaten werden im ersten Schnittstellencontroller daraufhin geprüft, ob sie Schreibzugriffe auf die reservierten Schreibblöcke oder Lesezugriffe auf die reservierten Leseblöcke enthalten. Ist das der Fall, schreibt der erste Schnittstellencontroller die in dem Hostkommando enthaltenen Daten an die reservierte Schreibadresse bzw. liest an der reservierten Leseadresse abgelegte Daten aus. Der zweite Schnittstellencontroller wandelt an die reservierten Schreibdatenblöcke geschriebene Daten in das von dem IC-Chip verlangte Format um und leitet sie dem IC-Chip zu bzw. wandelt vom IC-Chip eingehende Daten in das vom Host verlangte Format und schreibt sie in die reservierten Leseadressen. Die Lösung erfordert zwei Controller und belastet die reservierte Lese- und Schreibblöcke im Flash-Speicher überproportional.

US 6,883,718 B1 beschreibt eine Chipkarte mit im Eckenbereich ausgebildeter USB-Kontaktzunge die über einen gesicherten und einen ungesicherten Speicher verfügt. Die unterschiedlichen Schnittstellen und die verschiedenen Speicher sind über einen Controller miteinander verbunden, der eingehende Daten gemäß den jeweiligen Hostvorgaben zuteilt.

Es ist Aufgabe der Erfindung, eine Speichervorrichtung mit einer Sicherheitsfunktion bereitzustellen, deren Realisierung keine wesentlichen Änderungen der inneren Struktur bedingt und die Zugriffe auf die Sicherheitsfunktion erlaubt, ohne daß dafür ein spezieller Treiber erforderlich ist. Aufgabe der Erfindung ist es weiter, einen Controller für eine solche Speichervorrichtung, ein Verfahren und ein System zum Betreiben einer Speichervorrichtung derart bereitzustellen, dass für einen Zugriff auf die Sicherheitsfunktion der Speichervorrichtung die Verwendung spezieller Treiber nicht erforderlich ist. Desweiteren soll es möglich sein, über standardisierte Befehle eine Zusatzfunktion aufrufen zu können.

Zur Lösung der Aufgabe schlägt die Erfindung ein Verfahren, eine Datenspeichervorrichtung und ein System mit einer Datenspeichervorrichtung mit Zusatzmodul vor, wobei die Datenspeichervorrichtung zumindest einen Speicherbereich umfasst, auf den über spezifische Speicherstrukturen bzw. Adressen zugegriffen werden kann, und die zumindest einen Controller zur Steuerung des Zugriffs auf den Speicherbaustein umfasst, wobei zumindest eine der spezifischen Speicherstrukturen bzw. Adressen als Zusatzfunktionsadresse reserviert bzw. definiert ist und wobei der Controller einen Zugriff auf den Speicherbaustein, der über die Zusatzfunktionsadresse erfolgt, in Anweisungen an das Zusatzmodul umsetzt und diese weiterleitet.

Die erfindungsgemäße Datenspeichervorrichtung kann in einem System verwendet werden, welches zusätzlich ein Terminal umfasst, wobei das Terminal auf die Datenspeichervorrichtung über eine Standardschnittstelle zugreift.

Terminals können elektronische Geräte oder Endgeräte aller Art sein, die über eine Schnittstelle für Datenspeichervorrichtungen verfügen, wie beispielsweise Personal Computer (PC), PDAs, SmartPhones, Digitalkameras, digitale Audiosysteme oder Ähnliches.

Das Endgerät bzw. die elektronische Vorrichtung kann mit einem üblichen Betriebssystem für Endgeräte betrieben werden, wie beispielsweise PokketPC, Symbian, Windows oder Linux, kann aber auch eine JAVA-Plattform sein.

Eine Software, Anwendung oder Applikation greift über geeignete Treiber des Betriebssystems auf die Massenspeicherkarte zu, wobei durch den Treiber ein Befehlssatz festgelegt ist, mit dem zwischen der Anwendung bzw. dem Endgerät und der Massenpeicherkarte oder der erfindungsgemäßen Datenspeichervorrichtung kommuniziert, insbesondere auf die Datenspeichervorrichtung zugegriffen werden kann.

Die Standardschnittstelle kann in einer Aufnahme für die Datenspeichervorrichtung vorgesehen sein. Die Aufnahme kann zum Einführen und zum Zugriff auf eine oder mehrere Arten von Massenspeicherkarten ausgelegt sein. Insbesondere kann die Aufnahme ein Lese- und/oder Schreibgerät für Massenspeicherkarten sein. In einer bevorzugten Ausführungsform ist die Standardschnittstelle eine MMC- oder SD--Schnittstelle, wie sie für handelsübliche Massenspeicherkarten Anwendung findet.

Die erfindungsgemäße Datenspeichervorrichtung kann die Form und Funktionalität eines handelsüblichen portablen Massenspeichermediums aufweisen, wie einer Multimedia Card (MMC), einer SD MemoryCard, eines Micro SD, einer Compact Flash-Karte oder auch eines MemorySticks, bzw. USB-Sticks oder anderer elektronischer Geräte, die mit einem Controller ausgestattet sind oder ausgestattet werden können (z.B. mobile Datenträger wie CDs, DVDs etc.) und mit diesem kompatibel verwendet werden. Vorteilhafterweise können somit alle bereits im Handel befindlichen Endgeräte weiterverwendet werden. Bisherige Endgeräte können auf die erfindungsgemäße Datenspeichervorrichtung in gleicher Art und Weise zugreifen wie auf gängige bekannte Datenspeichervorrichtungen, was einen deutlichen Kostenvorteil darstellt. Dies ist möglich, da sowohl die bisherige als auch die erfindungsgemäße Datenspeichervorrichtung gleiche Schnittstellen, gleiche Treiber, gleiche Host-Controller und gleiche Befehle verwenden können.

Der Speicherbaustein kann ein nichtflüchtiger Speicher, beispielsweise ein handelsüblicher Flash-Memory sein, wie er in Massenspeicherkarten verwendet wird. Ebenso liegen andere Speicherbausteinarten im Rahmen dieser Erfindung, wie RAM oder ROM Speicherbausteine oder miniaturisierte Festplatten.

Der Zugriff auf den Speicherbaustein erfolgt über eine Adresse. Die Adresse gibt direkt oder indirekt, d.h. über Verweise, Zeiger bzw. Pointer an, an welcher Stelle des Speichers ein Zugriff erfolgen soll. Die Adresse kann einer von mehreren Parametern sein, mit denen der Zugriff erfolgt, z.B. neben der Art des Zugriffsbefehls: wie READ; WRITE; SEARCH etc., Daten, Authentifizierungsdaten etc. Die zugeordnete Adresse gibt direkt oder indirekt an, wo auf den Speicherbaustein zurückgegriffen werden soll, insbesondere auf welchen Speicherblock oder welche Speicherblöcke.

Eine Adresse entspricht in einer bevorzugten Ausführungsform einer speziellen Speicherstruktur im Speicherbaustein, also einer oder mehrerer BlockAdressen, die erfindungsgemäß für die Zusatzfunktionalität reserviert sind. In einer alternativen Ausführungsform wird die spezielle Speicherstruktur durch zumindest eine Datei im Dateisystem gebildet, wobei die so reservierte Datei - z.B. über einen Directory-Eintrag und/oder eine File-Allocation-Table - einer festen Block-Adresse zugeordnet wird.

In einer bevorzugten Ausführungsform erfolgt der Zugriff auf den Speicherbaustein über Befehle, wobei die Befehle für alle Adressen gelten, also sowohl für "normale" Speicheradressen als auch für reservierte Speicheradressen für die Ausführung der Zusatzfunktion. Die Befehle sind dabei standardisiert und unabhängig von der zugeordneten Adresse. Die Befehle basieren auf dem verwendeten Betriebssystem und/ oder dem Treiber für die Massenspeicherkarte. Die Befehle umfassen für Massenspeicherkarten gängige Befehle wie Lese- und/oder Schreibbefehle, aber auch Suchkommandos, Identifizierungskommandos etc.

Die Befehle sind also durch die Anwendung, das Betriebssystem und/ oder durch den Treiber des Endgerätes festgelegt. Vorteilhafterweise ist es nicht notwendig, für die erfindungsgemäße Datenspeichervorrichtung spezielle Treiber oder spezielle Befehle zu verwenden, um Sicherheitsfunktionen auf der Karte bedienen zu können, sondern es kann auf Standard-Befehle und Standard-Treiber für handelsübliche Massenspeicherkarten zurückgegriffen werden. Dadurch kann in vorteilhafter Weise die erfindungsgemäße Datenträgervorrichtung mit Zusatzmodul mit Endgeräten betrieben werden, die über Treiber und Betriebssysteme für handelsübliche Massenspeicherkarten verfügen. Ein spezieller Treiber oder ein spezielles Betriebssystem für das Zusatzmodul ist somit nicht erforderlich.

Erfindungsgemäß steuert der Controller den Zugriff auf die Karten, insbesondere auf den Speicherbaustein, wobei aus der Menge der Adressen spezifische Adressen ausgewählt werden und als Zusatzfunktionsadressen für den Zugriff auf das Zusatzmodul reserviert werden, so dass eine oder mehrere Zusatzfunktionsadressen in dem Controller definiert sind und der Controller durch Auswerten der Adresse, über die auf den Speicherbaustein zugegriffen wird, vorbestimmte Funktionen ausführen kann, wenn ein Zugriff über die Zusatzfunktionsadresse erfolgt.

Der Controller wertet alle Zugriffe auf die Karte aus und erfasst die Adresse des jeweiligen Zugriffs. Es wird geprüft, ob die Adresse die vordefinierte Zusatzfunktionsadresse ist oder nicht. Bejahendenfalls leitet der Controller den Zugriff auf das Zusatzmodul um und aktiviert die Zusatzfunktionalität bzw. führt diese aus. Andernfalls kann der übliche Zugriff auf die Datenspeichervorrichtung und/oder den Speicherbaustein erfolgen.

In einer bevorzugten Ausführungsform ist es vorgesehen, den Zugriff einfach unverändert an das Zusatzmodul weiterzuleiten, ohne den Zugriff an sich zu modifizieren. Die erfindungsgemäße Funktion des Controllers kann aber auch darin bestehen, eine bestimmte Prozedur auszuführen und den Zugriff in veränderter Form, beispielsweise über vom Controller generierte Anweisungen, an das Zusatzmodul weiterzugeben. Die auszuführende Prozedur kann von der Art des Zugriffs, insbesondere von dem Befehl selbst oder dessen Parametern abhängig sein, so dass durch unterschiedliche Befehle oder/und Parameter über eine einzige Zusatzfunktionsadresse eine Vielzahl von Prozeduren ausgeführt werden kann. Damit können zusatzmodul-spezifische Zugriffe erfolgen, ohne dass der Treiber des Endgerätes dafür konfiguriert sein muss, wenn der Controller standard-treiberkonforme Befehle in zusatzmodul-spezifische Anweisungen umarbeitet bzw. umsetzt.

In einer bevorzugten Ausführungsform wertet der Controller also an den Speicherbaustein gerichtete Zugriffe aus und aktiviert bei Zugriffen, die über die Zusatzfunktionsadresse erfolgen, das Zusatzmodul. Bei dieser Ausführungsform kann das Zusatzmodul selbst aktiv werden und beispielsweise anhand des Befehls und/oder dessen Parameter oder anhand des vom Controller empfangenen modifizierten Zugriffs unterschiedliche Prozesse ausführen.

In einer weiteren Ausführungsform umfasst das Zusatzmodul einen Zusatzcontroller. Damit können die vom Controller weitergeleiteten Zugriffe weiter verarbeitet werden und zusatzmodulspezifische Funktionen und Prozesse aktiviert oder ausgeführt werden.

In einer bevorzugten Ausführungsform ist das Zusatzmodul ein Sicherheitsmodul, wobei ein Zugriff über die Zusatzfunktionsadresse eine Sicherheitsfunktionalität des Sicherheitsmoduls aktiviert. Die aktivierbare Sicherheitsfunktionalität kann dabei das Sichern und/oder Schützen bestimmter Daten in der Datenspeichervorrichtung umfassen. Mittels des Sicherheitsmoduls können aber auch andere sicherheits-relevante Prozesse ausgeführt getriggert und/ oder gesteuert werden.

In einer weiteren speziellen Ausführungsform umfasst das Zusatzmodul bzw. das Sicherheitsmodul einen SmartCard-Chip. Dieser kann ein handelsüblicher SmartCard-Chip oder ein speziell für die erfindungsgemäße Anwendung konstruierter oder angepasster Chip sein. Die Funktionen des SmartCard-Chips werden aufgerufen, indem der Controller die Zugriffe auf die Speichervorrichtung auswertet, gegebenenfalls umwandelt, und an den SmartCard-Chip weiterleitet.

In einer alternativen Ausführungsform umfasst das Zusatzmodul einen reservierten Speicherbereich des Speicherbausteins. Dabei ist kein separates Modul vorgesehen, sondern das Zusatzmodul ist in den Speicherbaustein integriert bzw. formt einen Teil des Speicherbausteins aus. Beispielsweise kann ein bestimmter Speicherbereich oder eine Partition des Speichers als Zusatzmodul verwendet werden. Wird dieser Bereich als Sicherheitsmodul verwendet, kann z.B. nur bei Zugriff über die Zusatzfunktionsadresse auf den gesonderten, damit sicheren Speicherbereich zugegriffen werden.

In einer speziellen Ausführungsform sind die Adressen, über die auf den Speicherbaustein zugegriffen wird, Blockadressen des Speicherbausteins. Einem Befehl bzw. Zugriff auf den Speicherbaustein ist eine direkte Block-adresse zugeordnet, die angibt auf welchen Speicherblock zugegriffen werden soll, insbesondere aus welchem Speicherblock gelesen bzw. in welchen Speicherblock geschrieben werden soll. In dieser Ausführungsform gibt die dem Zugriff zugeordnete Adresse direkt an, wo auf den Speicher zugegriffen werden soll.

In einer alternativen Ausführungsform sind die Adressen, über die auf den Speicherbaustein zugegriffen wird, Dateien in einem Dateisystem der Speichervorrichtung. In dieser Ausführungsform gibt die dem Zugriff zugeordnete Adresse indirekt an, nämlich über ein Dateisystem, wo auf den Speicher zugegriffen werden soll. Dies kann z.B. dann von Vorteil sein, wenn das Betriebssystem des Endgerätes nicht dazu ausgelegt ist, Blockspeicheradressen direkt auszugeben, wie dies z.B. in JAVA-Anwendungen der Fall ist.

Falls die Adressen Dateien eines Dateisystems sind, kann es in einer speziellen Ausführungsform vorgesehen sein, dass jeweils zumindest einer Datei in dem Dateisystem eine definierte Blockadressen fest zugewiesen ist. Somit ist eine Blockadresse des Speichers indirekt über eine Datei des Dateisystems zugeordnet und vice versa.

Die Erfindung umfasst auch ein Verfahren für den Zugriff auf eine Datenspeichervorrichtung mit Zusatzmodul und zumindest einem Speicherbaustein mit den Schritten: Senden eines Befehls an die Datenspeichervorrichtung mit einer Adresse auf der der Befehl ausgeführt werden soll; Bereitstellen einer vordefinierten Zusatzfunktionsadresse, wobei die Zusatzfunktionsadresse eine Adresse für den auf dem Speicherbaustein auszuführenden Befehl ist; Bestimmen, ob die Adresse des Befehls mit der vordefinierten Zusatzfunktionsadresse übereinstimmt; gegebenenfalls: Umsetzen bzw. Ändern des Befehls und Weiterleiten desselben an das Zusatzmodul, falls die Adresse des Befehls als Zusatzfunktionsadresse definiert ist; Weiterleiten des Befehls an den Speicherbaustein, falls die Adresse des Zugriff-Befehls nicht als Zusatzfunktionsadresse definiert ist.

Die erfindung stellt eine Vorrichtung nach Anspruch 1 sowie ein Verfahren nach Anspruch 11.

Weitere Merkmale und Vorteile der Erfindung ergeben sich aus der folgenden, lediglich beispielhaft und nicht einschränkend angeführten Beschreibung von bevorzugten Ausführungsformen, welche unter Bezugnahme auf die beiliegenden Zeichnungen zu lesen ist. Darin zeigen:
Figur 1 ein erstes Ausführungsbeispiel einer erfindungsgemäßen Speicherkarte mit Zusatzfunktionalität;
Figur 2 ein zweites Ausführungsbeispiel einer erfindungsgemäßen Speicherkarte mit Zusatzfunktionalität; und
die Figuren 3a und 3b den Zugriff auf eine Speicherkarte mit Zusatzfunktionalität.

In den Figuren und der folgenden Beschreibung spezieller Ausführungsformen werden gleiche oder ähnliche Teile mit den gleichen Bezugszeichen bezeichnet.

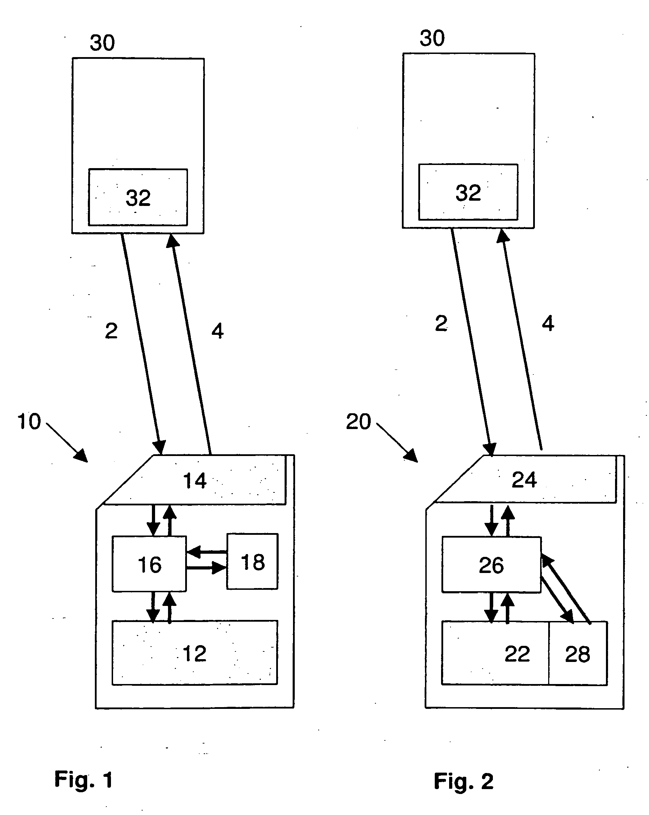

Figur 1 zeigt ein erstes Ausführungsbeispiel einer erfindungsgemäßen Speicherkarte 10, beispielsweise eine MultimediaCard (MMC) oder eine SD Card, mit Zusatzfunktionalität. Die Speicherkarte 10 umfasst eine Schnittstelle mit Kontakten 14, über die die Karte 10 mittels Signalen 2 und 4 mit einem elektronischen Endgerät 30 kommuniziert. Die Schnittstelle 14 entspricht der verwendeten Speicherkarte 10 und ist etwa eine MMC- oder eine SD-Schnittstelle. Daneben kann die Schnittstelle 14 auch als übliche Smart Card Schnittstelle, etwa als PC/SC Schnittstelle ausgebildet sein, Das Endgerät 30 dient hier als Hardware-Plattform und kann ein PC, PDA, SmartPhone, eine Digitalkamera, ein Audiogerät (MP3-Player) oder ähnliches sein, welches über einen Kartenleser 32 verfügt.

Die Speicherkarte 10 weist einen Controller 16, einen Speicherbaustein 12 und ein Zusatzmodul 18 auf, wobei der Controller 16 mit dem Speicherbaustein 12 kommuniziert, um Daten in den Speicherbaustein zu schreiben oder aus diesem auszulesen. Der Speicher kann ein Flash-Speicher sein. Der Controller 16 kommuniziert auch mit dem Zusatzmodul 18, welches in einer bevorzugten Ausführungsform ein SmartCard-Chip ist. Der Controller 16 kann somit anhand des von dem Endgerät 30 übermittelten Signals 2 entscheiden, ob er ein Signal an den Speicherbaustein 12 und/oder an das Zusatzmodul 18 weiterleitet und dann Funktionen des Speicherbausteins 12 und/oder des Zusatzmoduls 18 aufruft, oder ob er das Signal verarbeitet. Der Controller 16 hat somit die Funktion eines Decoders bzw. eines Schalters, der abhängig von dem empfangenen Signal 2 und/ oder von dem Befehl 8 unterschiedliche Module, z.B. das Zusatzmodul 18 oder den "normalen" Speicher 12, oder dasselbe Modul mit unterschiedlichen Anweisungen ansteuert.

Figur 2 zeigt ein alternatives Ausführungsbeispiel einer erfindungsgemäßen Speicherkarte 20, welche ebenfalls über eine Schnittstelle 24 mit Kontakten mittels der Signale 2 und 4 mit dem elektronischen Endgerät 30 kommuniziert. Der Kartenleser 32 und das Endgerät 30 können dabei baugleich mit dem in Figur 1 beschriebenem Gerät sein und insbesondere über die gleiche Schnittstellenkonfiguration, beispielsweise eine MMMC-, eine SD- oder eine PC/SC- Schnittstelle, kommunizieren.

Die Speicherkarte 20 verfügt über einen Controller 26 und einen Speicherbaustein 22, wobei ein Abschnitt des Speicherbausteins für das Zusatzmodul 28 reserviert ist. In diesem Ausführungsbeispiel ist es nicht notwendig, ein eigenes Bauelement, wie einen SmartCard-Chip, in die Speicherkarte zu integrieren, sondern das Speicherelement wird so konfiguriert, dass ein bestimmter Abschnitt, beispielsweise bestimmte Speicherblöcke, für die Zusatzfunktionalität und damit als Zusatzmodul reserviert sind.

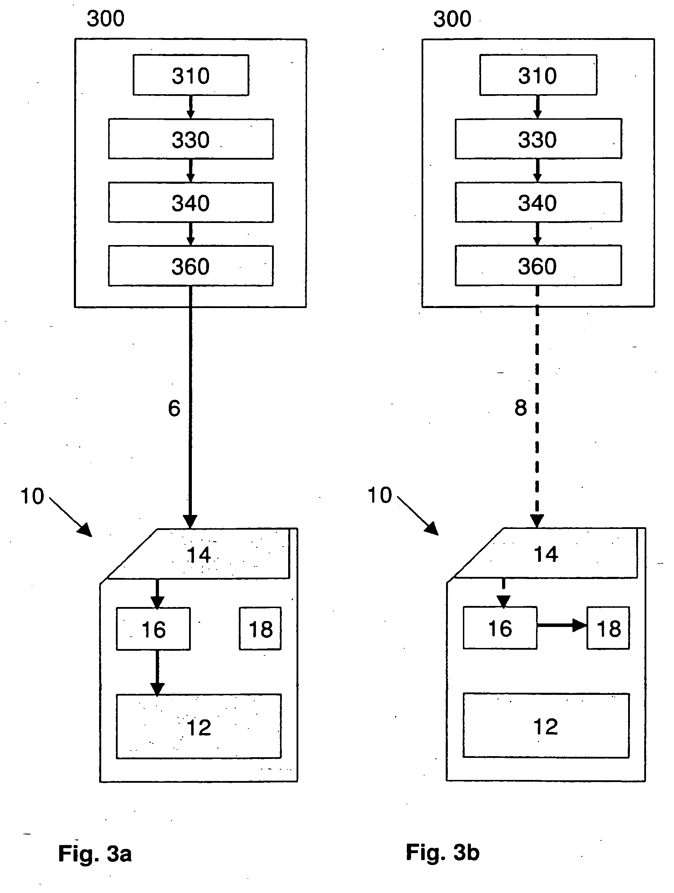

Die Figuren 3a und 3b zeigen das Funktionsprinzip eines Zugriffs auf die Speicherkarte 10 aus Figur 1; dieses kann aber auch anlog auf andere erfindungsgemäße Speichervorrichtungen angewendet werden.

Das Endgerät 300 läuft mit einem Betriebssystem 330, beispielsweise PokketPC, Symbian, Linux oder einem Windows Betriebssystem. Eine Anwendung 310 sendet einen Befehl, beispielsweise eine Lese- oder Schreibbefehl, an das Betriebssystem 330, um eine bestimmte Datei und/oder einen bestimmten Block des Speichers auszulesen bzw. zu beschreiben, der in dem Zugriffsbefehl mittels einer Adresse gekennzeichnet ist. Das Betriebssystem 330 wandelt den Befehl um und leitet ihn mit der Adresse an den Treiber 340 für die Speicherkarte weiter. Der Treiber 340, beispielsweise ein Standard-FlashCard-Treiber, leitet den Befehl mit der Adresse an einen Host-Controller 360 weiter, der diesen über die Schnittstelle und Kontakte 14 an den Controller 16 der Speicherkarte 10 weiterleitet.

In einer zeitlich vorgelagerten Konfigurationsphase wird die Zusatzfunktionsadresse reserviert bzw. definiert. Diese Konfiguration wird dem Betriebssystem und der Anwendung mitgeteilt.

Der Controller 16 bestimmt, ob die Adresse einer vorbestimmten Zusatzfunktionsadresse entspricht. Stimmt die Adresse eines Befehls 6 nicht mit der Zusatzfunktionsadresse überein, übermittelt der Controller 16 den Befehl weiter an Speicherbaustein 12 oder führt den Befehl auf dem Speicherbaustein 12 aus, wie in Fig. 3a dargestellt.

Stimmt die Adresse eines Befehls 8 mit der Zusatzfunktionsadresse überein, leitet der Controller 16 den Befehl 8 an das Zusatzmodul 18 weiter, wie in Figur 3b dargestellt.

Der Befehl 8 kann dann in dem Zusatzmodul 18 verarbeitet werden. Das Zusatzmodul 18 kann dazu über einen Zusatzmodulcontroller verfügen.

Der Controller 16 kann auch dazu konfiguriert sein, den Befehl 8 zu verarbeiten und eine Funktion des Zusatzmoduls 18 zu aktivieren oder eine andere Anweisung auszuführen, wenn die Adresse des Befehls 8 mit der Zusatzfunktionsadresse übereinstimmt.

Der Controller 16, 26 umfasst in einer bevorzugten Ausführungsform eine Umschalteinheit, die dazu bestimmt ist, den Befehl 8 für den Zugriff auf die Karte in Anweisungen an das Zusatzmodul 18, 28 umzusetzen, falls der Befehl 8 an die Zusatzfunktionsadresse gerichtet war.

## Patentansprüche

1. Datenspeichervorrichtung (10; 20) mit einem Zusatzmodul (18; 28), das eine zusatzmodulspezifische Funktion ausführt oder einen zusatzmodulspezifischen Prozeß aktiviert, wobei die Datenspeichervorrichtung (10;20).
- zumindest einen Speicherbaustein (12; 22), auf den über Adressen zugegriffen werden kann, sowie
- zumindest einen Controller (16; 26) zur Steuerung eines Zugriffs auf den Speicherbaustein (12; 22),
umfasst;
wobei das Zusatzmodul einen Zusatzcontroller (18; 28) umfasst, der unabhängig von dem Controller (16,26) die Ausführung einer zusatzmodulspezifischen Funktion oder eines zusatzmodulspezifischen Prozesses erlaubt,
wobei der Controller (16, 26) bei einem Zugriff auf den Speicherbaustein (12; 22) entweder den Speicherbaustein (12; 22) oder das Zusatzmodul (18; 28) ansteuert,
wobei zumindest eine der Adressen als Zusatzfunktionsadresse definiert ist, und
wobei der Controller (16; 26) einen Zugriff auf den Speicherbaustein (12; 22), der über die Zusatzfunktionsadresse erfolgt, an das Zusatzmodul (18; 28) weiterleitet, um durch den Zusatzcontroller weiterverarbeitet zu werden oder eine zusatzmodulspezifische Funktion zu aktivieren oder einen zusatzmodulspezifischen Prozeß auszulösen.

2. Datenspeichervorrichtung nach Anspruch 1, wobei der Zugriff auf den Speicherbaustein (12; 22) über Befehle (6; 8) erfolgt, wobei die Befehle (6; 8) für alle Adressen gelten.

3. Datenspeichervorrichtung nach Anspruch 1 oder 2, wobei der Controller (16; 26) eine Auswerte-Einheit umfasst, die dazu bestimmt ist, an den Speicherbaustein (12; 22) gerichtete Zugriffe auszuwerten und bei Zugriffen, die über die Zusatzfunktionsadresse erfolgen, das Zusatzmodul (18; 28) zu aktivieren.

4. Datenspeichervorrichtung nach einem der vorangehenden Ansprüche, wobei der Controller (16; 26) eine Umschalt-Einheit umfasst, die dazu bestimmt ist, den Zugriff auf den Speicherbaustein (12; 22) zu bearbeiten und in Anweisungen an das Zuatzmodul (18; 28) umzusetzen.

5. Datenspeichervorrichtung nach einem der vorangehenden Ansprüche, wobei das Zusatzmodul (18; 28) ein Sicherheitsmodul ist und wobei ein Zugriff über die Zusatzfunktionsadresse eine Sicherheitsfunktionalität des Sicherheitsmoduls aktiviert.

6. Datenspeichervorrichtung nach einem der vorangehenden Ansprüche, wobei das Zusatzmodul (18; 28) einen reservierten Speicherbereich des Speicherbausteins (12; 22) umfaßt.

7. Datenspeichervorrichtung nach einem der vorangehenden Ansprüche, wobei die Adressen, über die auf den Speicherbaustein (12; 22) zugegriffen wird, Blockadressen des Speicherbausteins (12; 22) sind.

8. Datenspeichervorrichtung nach einem der Ansprüche 1 bis 6, wobei die Adressen, über die auf den Speicherbaustein (12; 22) zugegriffen wird, Dateien in einem Dateisystem der Speichervorrichtung sind.

9. Datenspeichervorrichtung nach Anspruch 8, wobei den Dateien in dem Dateisystem definierte Blockadressen fest zugewiesen sind.

10. System umfassend:
- eine Datenspeichervorrichtung (10; 20) nach einem der Ansprüche 1 bis 9; und

11. Verfahren für den Zugriff auf eine Datenspeichervorrichtung mit einem Controller (16,16), zumindest einem Speicherbaustein (12; 22) sowie einem Zusatzmodul (18; 28) mit eigenem Zusatzcontroller, umfassend:
- Einrichten des Controllers (16,16) so, dass er bei einem Zugriff auf den Speicherbaustein (12; 22) entweder den Speicherbaustein (12; 22) oder das Zusatzmodul (18, 28) ansteuert ;
- Senden eines Befehls (6; 8) für einen Zugriff mit einer Adresse für den Zugriff auf den Speicherbaustein (12; 22) an den Controller (16, 16);
- Bereitstellen einer vor-definierten Zusatzfunktionsadresse, wobei die Zusatzfunktionsadresse einer Adresse für den Zugriff auf das Zusatzmodul (18; 28) entspricht;
- Bestimmen, ob die Adresse des Befehls als Zusatzfunktionsadresse definiert ist;
- Weiterleiten des Befehls (8) an das Zusatzmodul (18; 28), falls die Adresse des Befehls als Zusatzfunktionsadresse definiert ist;
- Ausführen einer zusatzmodulspezifischen Funktion oder eines zusatzmodulspezifischen Prozesses durch das Zusatzmodul (18, 28), wenn der Befehl (8) an das Zusatzmodul (18, 28) weitergeleitet wurde;
- Ausführen des durch den Befehls (8) bestimmten Zugriffs auf durch den Controller (16, 26), falls die Adresse des Befehls (8) nicht mit der Zusatzfunktionsadresse übereinstimmt.
- ein Terminal (30; 300) mit einem Betriebssystem und zumindest einem Standard-Treiber zum Betreiben der Datenspeichervorrichtung;
wobei das Terminal auf die Datenspeichervorrichtung über eine Standardschnittstelle zugreift.

12. Verfahren für den Zugriff auf eine Datenspeichervorrichtung nach Anspruch 11, wobei das Weiterleiten des Befehls (8) ein Verarbeiten und/oder Umsetzen des Befehls (8) in Anweisungen an das Zusatzmodul (18; 28) umfasst.

13. Verfahren für den Zugriff auf eine Datenspeichervorrichtung nach einem der Ansprüche 11 oder 12, wobei das Bestimmen und/ oder Weiterleiten von einem Controller (16; 26) ausgeführt wird.

14. Verfahren für den Zugriff auf eine Datenspeichervorrichtung nach einem der Ansprüche 11 bis 13, wobei die Adressen, über die auf den Speicherbaustein (12; 22) zugegriffen wird, Blockadressen des Speicherbausteins (12; 22) oder Dateien in einem Dateisystem der Speichervorrichtung sind.

15. Computerprogrammprodukt für den Zugriff auf eine Datenspeichervorrichtung mit Zusatzmodul (18; 28), das direkt in einen Speicher eines Computers oder Mikrocomputers geladen werden kann und Softwarecodeabschnitte umfasst, mit denen die Verfahrensschritte gemäß zumindest einem der vorstehenden Verfahrensansprüche 11 bis 14 ausgeführt werden, wenn das Computerprogrammprodukt auf einem Prozessor des Computers oder Mikrocomputers ausgeführt wird.

## Claims

1. A data storage device (10; 20) with an additional module (18; 28) which executes a function that is specific to the additional module or activates a process that is specific to the additional module, wherein the data storage device (10; 20) comprises
- at least one memory element (12; 22) which is accessible via addresses, and
- at least one controller (16; 26) for controlling an access to the memory element (12; 22), wherein the additional module comprises an additional controller (18; 28), which, independently of the controller (16, 26), permits the execution of a function that is specific to the additional module or of a process that is specific to the additional module,
wherein, upon an access to the memory element (12; 22), the controller (16, 26) drives either the memory element (12; 22) or the additional module (18; 28),
wherein at least one of the addresses is defined as an additional functional address, and wherein the controller (16; 26) forwards an access to the memory element (12; 22) effected via the additional functional address to the additional module (18; 28), to be further processed by the additional controller or to activate a function that is specific to the additional module or trigger a process that is specific to the additional module.

2. The data storage device according to claim 1, wherein the access to the memory element (12; 22) is effected via commands (6; 8), wherein the commands (6; 8) apply to all addresses.

3. The data storage device according to claim 1 or 2, wherein the controller (16; 26) comprises an evaluation unit, which is intended to evaluate accesses addressed to the memory element (12; 22) and to activate the additional module (18; 28) when accesses are effected via the additional functional address.

4. The data storage device according to any of the preceding claims, wherein the controller (16; 26) comprises a switch unit, which is intended to process the access to the memory element (12; 22) and to convert the access into instructions to the additional module (18; 28).

5. The data storage device according to any of the preceding claims, wherein the additional module (18; 28) is a security module and wherein an access via the additional functional address activates a security functionality of the security module.

6. The data storage device according to any of the preceding claims, wherein the additional module (18; 28) comprises a reserved memory area of the memory element (12; 22).

7. The data storage device according to any of the preceding claims, wherein the addresses, via which the memory element (12; 22) is accessed, are block addresses of the memory element (12; 22).

8. The data storage device according to any of the claims 1 to 6, wherein the addresses, via which the memory element (12; 22) is accessed, are files in a file system of the storage device.

9. The data storage device according to claim 8, wherein the files in the file system have defmed block addresses permanently allocated thereto.

10. A system comprising:
- a data storage device (10; 20) according to any of the claims 1 to 9; and
- a terminal (30; 300) having an operating system and at least one standard driver for operating the data storage device,
wherein the terminal accesses the data storage device via a standard interface.

11. A method for accessing a data storage device having a controller (16, 16), at least one memory element (12; 22) and an additional module (18; 28) with an additional controller of its own, comprising:
- setting up the controller (16, 16) such that, upon an access to the memory element (12; 22), it drives either the memory element (12; 22) or the additional module (18; 28);
- sending a command (6; 8) for an access with an address for the access to the memory element (12; 22) to the controller (16, 16);
- supplying a predefined additional functional address, wherein the additional functional address corresponds to an address for the access to the additional module (18; 28);
- determining whether the address of the command is defined as an additional functional address;
- forwarding the command (8) to the additional module (18; 28) if the address of the command is defined as an additional functional address;
- executing a function specific to the additional module or a process specific to the additional module by the additional module (18, 28) when the command (8) was forwarded to the additional module (18, 28);
- executing the access determined by the command (8) by the controller (16, 26) if the address of the command (8) does not match the address of the additional function.

12. A method for accessing a data storage device according to claim 11, wherein the forwarding of the command (8) comprises processing and/ or converting the command (8) into instructions to the additional module (18; 28).

13. The method for accessing a data storage device according to any of the claims 11 or 12, wherein the determining and/ or forwarding is carried out by a controller (16; 26).

14. The method for accessing a data storage device according to any of the claims 11 to 13, wherein the addresses, via which the memory element (12; 22) is accessed, are block addresses of the memory element (12; 22) or files in a file system of the storage device.

15. A computer program product for accessing a data storage device having an additional module (18; 28), which can be directly loaded into a memory of a computer or microcomputer, comprising software code portions with which the method steps according to at least one of the preceding method claims 11 to 14 are carried out, when the computer program product is executed on a processor of the computer or microcomputer.

## Revendications

1. Dispositif de mémorisation de données (10; 20) doté d'un module additionnel (18; 28) qui exécute une fonction spécifique au module additionnel ou active un processus spécifique au module additionnel, le dispositif de mémorisation de données (10; 20) comprenant :
- au moins un élément mémoire (12; 22) sur lequel il peut être accédé par l'intermédiaire d'adresses, ainsi que
- au moins un contrôleur (16; 26) pour la commande d'un accès à l'élément mémoire (12; 22),
le module additionnel comprenant un contrôleur additionnel (18; 28) qui autorise indépendamment du contrôleur (16, 26) l'exécution d'une fonction spécifique au module additionnel ou d'un processus spécifique au module additionnel,
le contrôleur (16, 26) commandant, lors d'un accès à l'élément mémoire (12; 22), soit l'élément mémoire (12; 22), soit le module additionnel (18; 28),
au moins une des adresses étant définie comme adresse de fonction additionnelle, et
le contrôleur (16; 26) transmettant au module additionnel (18; 28) un accès à l'élément mémoire (12; 22) qui a lieu par l'intermédiaire de l'adresse de fonction additionnelle, pour être traité subséquemment par le contrôleur additionnel ou pour activer une fonction spécifique au module additionnel ou pour déclencher un processus spécifique au module additionnel.

2. Dispositif de mémorisation de données selon la revendication 1, l'accès à l'élément mémoire (12; 22) ayant lieu par l'intermédiaire d'ordres (6 ; 8), les ordres (6 ; 8) étant valables pour toutes les adresses.

3. Dispositif de mémorisation de données selon la revendication 1 ou 2, le contrôleur (16; 26) comprenant une unité d'évaluation destinée à évaluer des accès visant l'élément mémoire (12; 22) et, dans le cas d'accès qui ont lieu par l'intermédiaire de l'adresse de fonction additionnelle, à activer le module additionnel (18; 28).

4. Dispositif de mémorisation de données selon une des revendications précédentes, le contrôleur (16; 26) comprenant une unité de commutation qui est destinée à traiter l'accès à l'élément mémoire (12; 22) et à le convertir en instructions à l'envers du module additionnel (18; 28).

5. Dispositif de mémorisation de données selon une des revendications précédentes, le module additionnel (18; 28) étant un module de sécurité et un accès par l'intermédiaire de l'adresse de fonction additionnelle activant une fonctionnalité de sécurité du module de sécurité.

6. Dispositif de mémorisation de données selon une des revendications précédentes, le module additionnel (18; 28) comprenant une zone mémoire réservée de l'élément mémoire (12; 22).

7. Dispositif de mémorisation de données selon une des revendications précédentes, les adresses par l'intermédiaire desquelles il est accédé à l'élément mémoire (12; 22) étant des adresses de bloc de l'élément mémoire (12; 22).

8. Dispositif de mémorisation de données selon une des revendications de 1 à 6, les adresses par l'intermédiaire desquelles il est accédé à l'élément mémoire (12; 22) étant des fichiers dans un système de fichiers du dispositif de mémorisation.

9. Dispositif de mémorisation de données selon la revendication 8, des adresses de bloc définies étant affectées à demeure aux fichiers dans le système de fichiers.

10. Système, comprenant:
- un dispositif de mémorisation de données (10; 20) selon une des revendications de 1 à 9; et
- un terminal (30; 300) doté d'un système d'exploitation et d'au moins un pilote standard pour exploiter le dispositif de mémorisation de données;
le terminal accédant au dispositif de mémorisation de données par l'intermédiaire d'une interface standard.

11. Procédé pour l'accès à un dispositif de mémorisation de données doté d'un contrôleur (16, 16), d'au moins un élément mémoire (12; 22) ainsi que d'un module additionnel (18; 28) équipé d'un propre contrôleur additionnel, comprenant
- configuration du contrôleur (16, 16) de telle sorte que, lors d'un accès à l'élément mémoire (12; 22), il commande soit l'élément mémoire (12; 22), soit le module additionnel (18, 28);
- envoi d'un ordre (6 ; 8) au contrôleur (16, 16) pour un accès avec une adresse pour l'accès à l'élément mémoire (12; 22);
- mise à disposition d'une adresse prédéfinie de fonction additionnelle, l'adresse de fonction additionnelle correspondant à une adresse pour l'accès au module additionnel (18; 28);
- détermination de si l'adresse de l'ordre est définie en tant qu'adresse de fonction additionnelle;
- transmission de l'ordre (8) au module additionnel (18; 28) dans le cas où l'adresse de l'ordre est définie en tant qu'adresse de fonction additionnelle;
- exécution d'une fonction spécifique au module additionnel ou d'un processus spécifique au module additionnel par le module additionnel (18, 28) une fois que l'ordre (8) a été transmis au module additionnel (18, 28);
- exécution de l'accès déterminé par l'ordre (8) par le contrôleur (16, 26) dans le cas où l'adresse de l'ordre (8) ne correspond pas à l'adresse de fonction additionnelle.

12. Procédé pour l'accès à un dispositif de mémorisation de données selon la revendication 11, la transmission de l'ordre (8) comprenant un traitement et/ou une conversion de l'ordre (8) en instructions à l'envers du module additionnel (18; 28).

13. Procédé pour l'accès à un dispositif de mémorisation de données selon une des revendications 11 ou 12, la détermination et/ou la transmission étant exécutée par un contrôleur (16; 26).

14. Procédé pour l'accès à un dispositif de mémorisation de données selon une des revendications de 11 à 13, les adresses par l'intermédiaire desquelles il est accédé à l'élément mémoire (12; 22) étant des adresses de bloc de l'élément mémoire (12; 22) ou des fichiers dans un système de fichiers du dispositif de mémorisation. -

15. Produit de programme d'ordinateur pour l'accès à un dispositif de mémorisation de données doté d'un module additionnel (18; 28), qui peut être directement chargé dans une mémoire d'un ordinateur ou d'un microordinateur et comprend des sections de code de logiciel avec lesquelles les étapes du procédé selon au moins une des revendications de 11 à 14 du procédé mentionnées précédemment sont exécutées quand le produit de programme d'ordinateur est exécuté sur un processeur de l'ordinateur ou du microordinateur.
